# EUROPEAN PATENT APPLICATION

(11) **EP 4 592 253 A1**
(43) Date of publication of application: **30.07.2025**
(21) Application number: 24382080.0
(22) Date of filing: 29.01.2024
(51) Int. Cl.: C02F 1/48, C02F 101/20

(54) **PROCESS FOR BREAKING UP ORGANIC PARTICLE AND MAGNETIC MATERIAL AGGREGATES USING AQUEOUS SOLUTIONS OF CARBONATES**

(71) Applicant: Captioplastic, S.L., 28050 Madrid (ES)
(72) Inventor: PARRA SÁNCHEZ, Raquel, E-28050 Madrid (ES); CARBONERAS CONTRERAS, María Belén, E-28050 Madrid (ES); DOMÍNGUEZ BARRIO, Patricia, E-28050 Madrid (ES); FERNÁNDEZ BENITO, Amparo, E-28050 Madrid (ES)
(74) Representative: ABG Intellectual Property Law, S.L.

(57) **Abstract**

The present invention relates to a process for breaking up aggregates of organic particles, such as microplastics and/or microfibers, and magnetic material. The process allows both the regeneration of the magnetic material and its continuous use and obtaining organic particles and/or microfibers free of magnetic material, as well as the reuse of the saline solution used for breaking up.

## Description

### FIELD OF THE INVENTION

The present invention relates to a process for the regeneration of the magnetic material used in the magnetic separation of organic particles, particularly microplastics, from aqueous matrices. The process also allows obtaining clean microplastics free of magnetic material. The invention comprises breaking up the magnetic material-organic particle aggregates by means of treatment with an aqueous saline solution of alkaline metal, alkaline earth metal, or ammonium bicarbonates or carbonates, and the subsequent separation by applying a magnetic field. The process allows the continuous reuse of the magnetic material multiple times, as well as the reuse of the concentrated solution of salt for breaking up the aggregate multiple times.

### BACKGROUND OF THE INVENTION

Plastics are and have been used in many applications in everyday life due to their good properties, low cost and light weight. The term "plastic footprint" exists and refers to the widespread distribution and leakage of plastics into the environment, meaning that the increasing use of plastics in recent years has accelerated the spread and dissemination of plastic waste.

Pollution by microplastics (MPs) has become a globally recognized environmental problem in recent years. These tiny microplastics have been found in various aquatic media, such as oceans, rivers, and lakes. They pose a potential risk to ecosystems and human health, as they can be ingested by aquatic organisms and transferred to the food chain. Therefore, the removal of microplastics in water has become a problem that needs effective and sustainable solutions.

There are several technologies that have been developed to remove MPs from water, such as flotation, filtration, and adsorption, among others. Magnetic separation has attracted increasing attention as it is a low-cost and scalable solution in which a number of magnetic materials have been developed for this purpose in recent years. Magnetic materials can trap most common plastics. On the other hand, in the case of using magnetic separation as a method for analyzing the microplastics present in aqueous matrices, the generation of microplastic-magnetic material aggregates leads to an increase in the density of the microplastics, which would limit subsequent density separation of said microplastics from the rest of the solids present in the water (and which would also have interacted with the magnetic material). Likewise, subsequent characterization of the microplastics would also be hindered since they would form part of the aggregates, and the magnetic material may interfere in the analyses.

According to recent studies (ES 2 796 998 A1 and WO 2020/240069 A1 and Grbic, J.et al., Environmental Science and Technology Letters, 6 (2019), 68-72), the separation of microplastics from water is highly effective by means of the interaction thereof with magnetic particles and the subsequent application of a magnetic field regardless of the nature and size of the microplastics. This method has important advantages with respect to conventional filtration methods, although it entails a relatively high consumption of magnetic material and invariably generates waste (aggregates of microplastics with the magnetic particles).

Reuse of the magnetic materials can reduce cost in real applications. The repeated recycling of the magnetic material is an important indicator of its capture performance, which requires the material to not only show a high capture efficiency, but to also have the capacity to be reused many times.

According to recent studies (Zhao, H. et al., Chemical Engineering Journal, 430 (2022), 133122), the reuse of a new magnetic material based on modifications of floating ash with iron to determine its applicability in the treatment of wastewater containing MPs is demonstrated. For its reuse, the magnetic material is subjected to consecutive washes with ethanol and heating in a tubular furnace at 600°C for 2 hours to be able to remove the MPs. The reuse of the magnetic material is demonstrated in this study, but in the fifth cycle its capacity to remove MPs was significantly reduced.

According to recent studies (Tang, Y. et al., Chemical Engineering Journal, 406 (2021), 126804), the reuse of magnetic carbon nanotubes (M-CNTs) for the removal of microplastics in wastewater is demonstrated. To that end, the M-CNTs can be reused by subjecting them to heat treatments of 600°C, with the magnetic material being reused up to 4 times before the MP removal yield is less than 80%.

According to recent studies (Heo, Y. et al., Chemosphere, 307 (2022), 135672), iron oxide nanoparticles are used to carry out a process of adsorption and desorption of polystyrene (PS) MPs. An ultrasonic bath and a subsequent treatment with a 5% NaCl solution is used for desorption. This leaves, on the one hand, the PS MPs, and on the other hand, the iron oxide particles which can be reused repeatedly as an adsorbent for the removal of PS microparticles. These studies show that the desorption of PS improves with the number of washing cycles. After subjecting it to three cycles of sonication and subsequent treatment with a 5% NaCl solution, a desorption efficiency that reached 84.8% is observed. Once desorption is done, the magnetic material is reused reaching an efficacy of 83.1 %.

According to another study (Sun, C., et al., Journal of Hazardous Materials, 420 (2021), 126599), a robust and compressive sponge was synthesized by means of chitin and graphene oxide (ChGO), which could effectively adsorb PS microbeads and possessed excellent reusability, biocompatibility and biodegradability. The ChGO sponge could remove about 90% of the PS microbeads after repeated use three times by means of regeneration of washing with ethanol and freeze-drying treatment.

According to another study (Shi, C., et al., Separation and Purification Technology, 288 (2022), 120564), magnetic sepiolite is used for the removal of MPs in water, subsequently recycling it at 80°C for 12 hours.

According to another study (Liu, Q., et al., Environmental Science and Pollution Research, 30 (2023), 117373) using Fe₃O₄@SiO₂@MIL-53(Al), 5 cycles of recycling experiments were performed. The materials were washed with tetrahydrofuran for 12 h after each use, followed by ethanol 3 times, and were dried overnight. After drying, the recovered materials could be used directly for the following cycle of experiments.

According to another study (Shi, Y., et al., Environmental Pollution, 318 (2023), 120897), an effective and reusable magnetic biochar-modified cetyltrimethylammonium bromide (CMB) composite was prepared. The CMB was reused to remove PS nanoparticles in real surface waters after simply separating same with a magnet and rinsing three times with deionized water.

According to recent studies (WO2020240069), the inventors have discovered that microplastic and magnetic iron material aggregates can be broken up and both types of solids thereby separated. Regeneration of the magnetic iron material is also achieved by washing with abundant water in order to be reused in a water treatment system. This study is developed using a concentrated saline solution of certain salts that allows breaking the interaction of the aggregates and thus separating the MPs from the magnetic material. The magnetic iron material is washed with abundant water and then placed in an oven for 12 hours at 60°C for its subsequent reuse.

In view of the background, there is a need to improve the existing methodology of the method for breaking up the microplastic-magnetic material and the separation of both types of and that further allow reusing the magnetic compound and/or the solution used for continuous breaking up of the aggregate in an efficient, fast, environmentally friendly manner and with lower energy consumption, preferably having zero waste in the entire process, and in a cost-effective manner.

### SUMMARY OF THE INVENTION

The inventors have unexpectedly discovered a process for breaking up aggregates of organic particles, such as microplastics, and magnetic iron material which achieves separating both types of solids and reusing the magnetic iron material, as well as the salt used for breaking up the aggregate. This separation allows facilitating the subsequent characterization and identification of the organic particles, such as MPs and/or microfibers (MFs), as well as having zero waste in the continuous process of capturing these contaminants, being an environmentally friendly process. This methodology allows continuously regenerating the magnetic iron material, allowing its reuse multiple times. Furthermore, it allows the reuse of the salt solution used for breaking up the aggregate multiple times. Both the separation of the constituents forming the aggregate and the reuse of the magnetic material is a simple, low-cost, scalable, and environmentally friendly process.

As shown in the examples, the breaking up of the aggregates is highly effective with a high breakup performance percentage (greater than 95%). This process obtained completely clean MPs ready for subsequent identification or valorization. This process is very advantageous since it allows the recovery of the magnetic material which was used again in the system several times without observing a loss of efficacy. Another one of the advantages of this method is that all reagents which are used can be recovered and reused multiple times, thereby being an environmentally friendly process. Furthermore, this process allows designing continuous system by means of the simplicity of the equipment required and the low cost of the materials and reagents used. Lastly, as observed in the examples, the methods have shown high efficiency and reproducibility.

To that end, in a first aspect, the invention relates to a process for breaking up aggregates of magnetic iron material with organic particles and/or microfibers, the process comprising:
a) providing the aggregates of magnetic iron material with organic particles and/or microfibers, wherein the size of the organic particles is comprised in the range of 0.1 µm to 5 mm,
b) introducing the aggregates of step a) in an aqueous solution of a salt selected from the group consisting of alkaline metal bicarbonate, alkaline earth metal bicarbonate, ammonium bicarbonate, alkaline metal carbonate, ammonium carbonate, and a mixture of one or more of said salts, and wherein the concentration of said salt or mixture of said salts is at least 4 g/L, to break up the aggregates, and
c) optionally separating the magnetic iron material particles from the organic particles and/or microfibers by applying a magnetic field.

In a second aspect, the invention relates to a process for breaking up aggregates of magnetic iron material with organic particles and/or microfibers by means of the use of an aqueous solution of a salt selected from the group consisting of alkaline metal bicarbonate, alkaline earth metal bicarbonate, ammonium bicarbonate, alkaline metal carbonate, ammonium carbonate, and a mixture of one or more of said salts, wherein the concentration of said salt or its mixtures is at least 4 g/L, and the reuse of said aqueous salt solution, the process comprising:
i) performing steps a)-c) defined in the first aspect,
ii) filtering the resulting mixture after the separation of the magnetic iron material particles of step c) to obtain the aqueous solution of a salt selected from the group consisting of alkaline metal bicarbonate, alkaline earth metal bicarbonate, ammonium bicarbonate, alkaline metal carbonate, ammonium carbonate, and a mixture of one or more of said salts, wherein the concentration of said salt or its mixtures is at least 4 g/L,
iii) providing aggregates of magnetic iron material with organic particles and/or microfibers, wherein the size of the organic particles is comprised in the range of 0.1 µm to 5 mm,
iv) introducing the aggregates of step iii) in the aqueous salt solution obtained in step ii) to break up the aggregates, and
v) optionally separating the magnetic iron material particles from the organic particles and/or microfibers by applying a magnetic field.

In a third aspect, the invention relates to a process for breaking up aggregates of magnetic iron material with organic particles and/or microfibers and the reuse of the magnetic iron material, the process comprising:
A) performing steps a)-c) defined in the first aspect,
B) washing the magnetic material particles separated in step c), preferably wherein the washing is performed with water or with an acidic aqueous solution,
C) providing an aqueous matrix comprising organic particles and/or microfibers, wherein the size of the organic particles is comprised in the range of 0.1 µm to 5 mm,
D) adding the washed magnetic material particles obtained after step B) to the aqueous matrix provided in step C) to form aggregates of magnetic iron material with organic particles and/or microfibers, and
E) optionally separating aggregates of the magnetic iron material particles with organic particles and/or microfibers by applying a magnetic field.

In a fourth aspect, the invention relates to the use of the process for breaking up aggregates of magnetic iron material with organic particles and/or microfibers according to the first aspect for the recovery of the magnetic iron material and/or the recovery of the aqueous solution of a salt selected from the group consisting of alkaline metal bicarbonate, alkaline earth metal bicarbonate, ammonium bicarbonate, alkaline metal carbonate, ammonium carbonate, and a mixture of one or more of said salts.

### DESCRIPTION OF THE FIGURES

Figure 1: Images of the breaking up of the aggregate with the different salts over time.
Figure 2: Efficacy of the removal of MPs with the recycled magnetic material.
Figure 3: Efficiency of the reuse of the magnetic iron material when reusing the saline NaHCO₃ solution and washing with water.
Figure 4: Efficiency of the reuse of the saline NaHCOs solution when washing the magnetic material with water.
Figure 5: Efficiency of the reuse of the magnetic iron material when reusing the saline NaHCO₃ solution and washing with HNO₃.
Figure 6: Efficiency of the reuse of the saline NaHCOs solution when washing the magnetic material with acid.
Figure 7: Efficiency of the reuse of the magnetic iron material when using the saline KHCO₃ solution for breaking up the aggregate and subsequently washing with water.
Figure 8: Efficiency of the reuse of the magnetic iron material when using the saline Na₂CO₃ solution for breaking up the aggregate and subsequently washing with water.

### Detailed Description of the Invention

The first aspect of the invention relates to a process for breaking up aggregates of magnetic iron material with organic particles and/or microfibers, the process comprising:
a) providing the aggregates of magnetic iron material with organic particles and/or microfibers, wherein the size of the organic particles is comprised in the range of 0.1 µm to 5 mm,
b) introducing the aggregates of step a) in an aqueous solution of a salt selected from the group consisting of alkaline metal bicarbonate, alkaline earth metal bicarbonate, ammonium bicarbonate, alkaline metal carbonate, ammonium carbonate, and a mixture of one or more of said salts, and wherein the concentration of said salt or mixture of said salts is at least 4 g/L, to break up the aggregates, and
c) optionally separating the magnetic iron material particles from the organic particles and/or microfibers by applying a magnetic field.

Step a) is providing the aggregates of magnetic iron material with organic particles and/or microfibers, preferably aggregates of microplastics and/or microfibers with magnetic iron material particle, more preferably aggregates of microplastics with magnetic iron material particles.

The aggregates of magnetic iron material with organic particles and/or microfibers, preferably aggregates of microplastics and/or microfibers with magnetic iron material particles, more preferably aggregates of microplastics with magnetic iron material particles, may have been obtained, for example, by following the processes described in patent documents ES 2 796 998 A1 and WO 2020/240069 A1, or the processes for forming aggregates described in the third aspect of the present invention.

The expression "organic particles" includes both "non-plastic organic particles" and "microplastics" defined herein.

The size of the organic particles is 0.1 µm to 5 mm, more preferably in the range of 0.1 µm to 1 mm, even more preferably in the range of 0.1 µm to 500 µm, even more preferably 100 µm to 500 µm, even more preferably 100 µm to 250 µm. Said size can be determined by means of scanning electron microscopy, for example, using a Nikon Eclipse Ci-S/Ci-L vertical light microscope equipped with a DS-Fi2 digital camera and a DS-U3 control unit, with software for measuring and processing images (NIS-Elements L imaging). A JEOL JSM 6335F scanning electron microscope, with 10 X to 500,000 X magnification can also be used. The length and width of the organic particles are measured, and they are assigned the size of the largest dimension (length). The average diameter is defined as the average length of the organic particles (summation of lengths of the analyzed particles among the number of analyzed particles).

In the context of the present invention, the term "microplastic" or "microplastics" refers to a plastic material with an average diameter comprised in the range of 0.1 µm to 5 mm, more preferably in the range of 0.1 µm to 1 mm, even more preferably in the range of 0.1 µm to 500 µm, even more preferably 100 µm to 500 µm, even more preferably 100 µm to 250 µm. The size of the microplastics can be determined as described for the organic particles.

The microplastics can be formed by any plastic material, preferably synthetic organic polymers, such as polyethylene terephthalates (PET), polyethylenes (PE) including high-density polyethylenes (HDPE) and low-density polyethylenes (LDPE), polyvinyl chlorides (PVC), polypropylenes (PP), polystyrenes (PS), polycarbonates (PC), polyurethanes (PU), and combinations thereof.

"Polyethylene terephthalate" or "PET" is a polymer that can be obtained by means of a reaction of polycondensation between terephthalic acid and ethylene glycol. Polyethylene terephthalate has the following structure.

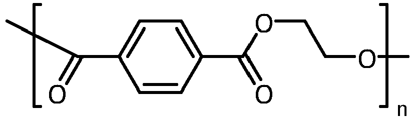

"Polyethylene" or "PE" refers to a polymer that can be obtained by the polymerization of ethylene. Polyethylene has the following structure.

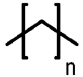

"High-density polyethylene" or "HDPE" refers to a polyethylene the density of which is comprised in the range of 0.930 to 0.970 g/mL. "Low-density polyethylene" or "LDPE" refers to a polyethylene the density of which is comprised in the range of 0.917 to 0.930 g/mL.

"Polyvinyl chloride" or "PVC" refers to a polymer that can be obtained by the polymerization of vinyl chloride. Polyvinyl chloride has the following structure.

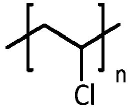

"Polypropylene" or "PP" refers to a polymer that can be obtained by the polymerization of propylene. Polypropylene has the following structure.

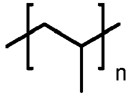

"Polystyrene" or "PS" refers to a polymer that can be obtained by the polymerization of styrene. Polystyrene has the following structure.

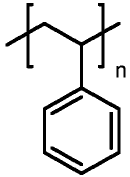

"Polycarbonate" or "PC" refers to a polymer comprising functional groups attached by carbonate groups (-O-C=O)-O-), such as for example diallyl diethylene glycol polycarbonate, or the most widely known, bisphenol A polycarbonate, the structure of which is shown below.

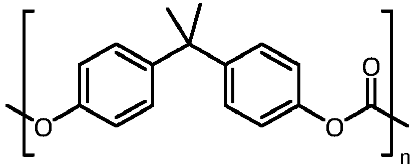

"Polyurethane" or "PU" refers to a polymer that can be obtained by the condensation of polyols, among which ethylene glycol and propylene glycol stand out, and polyisocyanates, among which methylene diphenyl diisocyanate (MDI) and toluene diisocyanate (TDI) stand out, giving rise to urethane groups (-NH-(C=O)-O-) in the structure of the polymer. There is a wide range of polyurethanes due to the range of polyisocyanates and polyols that can be used to form them.

In a preferred embodiment, the microplastic is selected from the group consisting of polyethylene terephthalate (PET), polyethylene (PE) including high-density polyethylene (HDPE) and low-density polyethylene (LDPE), polyvinyl chloride (PVC), polypropylene (PP), polystyrene (PS), polycarbonate (PC), polyurethane (PU) and mixtures thereof; more preferably polystyrene, polyethylene, polyethylene terephthalate, and a mixture thereof; even more preferably polystyrene, polyethylene, and a mixture thereof; most preferably polystyrene. An advantage of the process of the invention is its universal character because the aggregates of magnetic iron material with microplastics are broken up in an efficient manner regardless of the chemical nature of the microplastic.

In a particular embodiment, the microplastics are selected from the group consisting of polystyrene, polypropylene, polyethylene terephthalate, and a mixture thereof; preferably the microplastics are selected from the group consisting of polystyrene, polypropylene, polyethylene terephthalate, and a mixture thereof with a size in the range of 100 µm to 500 µm, preferably 100 µm to 250 µm.

In the context of the present invention, the term "microfiber" or "microfibers" refers to a solid organic polymer material, being in the form of fibers having a length of not more than 15 mm, preferably not more than 5 mm, more preferably not more than and 1 mm, with an aspect ratio of at least 10:1, preferably at least 15:1, and a size of less than 100 µm in the smallest dimension thereof, preferably less than 50 µm, more preferably less than 20 µm. Preferably, the microfibers have a length of 1 µm to 15 mm, preferably 1 µm to 5 mm, more preferably 1 µm to 1 mm, even more preferably 100 µm to 1 mm, even more preferably 100 µm to 500 µm. Preferably, the microfibers have an aspect ratio of between 10:1 and 500:1, preferably between 10:1 and 100:1, even more preferably between 15:1 and 100:1. Preferably, the microfibers have the smallest dimension thereof with a size of 0.1 µm to 100 µm, preferably 0.1 µm to 50 µm, more preferably 0.1 µm to 20 µm.

The "length" and the "smallest dimension" of the microfibers is determined in the same way as explained above for the organic particles. Their length refers to the dimension of the largest size of a microfiber and the smallest dimension refers to the dimension of the smallest size of a microfiber. The length of the microfibers is calculated as the average length, i.e., the summation of lengths of the microfibers analyzed among the number of analyzed microfibers. The dimension of the smallest size of the microfibers is calculated as the average dimensions of the smallest size of the microfibers (summation of dimensions of the smallest size of each of the microfibers analyzed among the number of analyzed microfibers). The aspect ratio refers to the ratio between the length of the microfiber and the dimension of the smallest size of the microfiber.

The microfibers can be anthropogenic and natural. Anthropogenic microfibers can be classified as synthetic or semi-synthetic depending on the source material and production process. Although natural fibers, such as cotton and wool, are derived from natural sources, they often contain chemical additives, such as colorants (dyes, pigments, etc.) and finishes (flame retardants, antimicrobial agents, UV light stabilizers, etc.). Synthetic microfibers include polyester microfibers (including polyethylene terephthalate (PET), polylactic acid (PLA), polytrimethylene terephthalate (PTT) microfibers), polyamide microfibers (including nylon and aramid microfibers), acrylic microfibers, polyolefin microfibers (including polyethylene, polypropylene and elastomer microfibers), rayon microfibers, and combinations thereof. Preferably the microfibers are polyester microfibers.

The expression "non-plastic organic particles" or "non-plastic organic solid particles" refers to particles which can have any shape and the average diameter of which is in the range of 0.1 µm to 5 mm, preferably 0.1 µm a 1 mm, more preferably 0.1 µm to 500 µm, even more preferably 100 µm to 500 µm, even more preferably 100 µm to 250 µm, and which are not made up of a plastic material, with the average diameter being the average length (summation of lengths of the analyzed particles among the number of analyzed particles) and the length being the largest dimension of each particle. Examples of plastics are the same as those described for microplastics. Examples of non-plastic (organic) material particles are helminth eggs, as well as those from a plant origin (leaves, branches, seeds, fruits, etc.), an animal origin (bones, microcrustaceans, larvae, animal remains, etc.), fungi, etc. The size of the particles can be determined in the same way as described above for the organic particles.

In the context of the present invention, the term "helminth egg" or "helminth eggs" refers to eggs from parasitic helminths that pose a high risk to human health and the environment. The size and shape of these eggs vary, although they are generally in the range of 20 to 80 µm [Ayres, R.M. and Mara, D.D., Analysis of wastewater for use in agriculture. A laboratory manual of parasitological and bacteriological techniques (1992) ISBN: 92-4-154484-8]. Egg size is analyzed by means of light microscopy, for example, using the conditions described above. The length and width of the helminth eggs are measured and assigned the size of the largest of their dimensions (length).

In a particular embodiment, the helminth eggs are selected from the group consisting of *Ascaris spp., Trichuris spp., Taenia spp.* eggs, and mixtures thereof; preferably, the helminth eggs are selected from the group consisting of *Ascaris lumbricoides, Trichuris trichiura, Taenia saginata, Taenia solium* eggs, and mixtures thereof.

In a particular embodiment, the organic particles are selected from the group consisting of microplastics, non-plastic organic particles, microfibers, and a mixture thereof; preferably microplastics, microfibers, helminth eggs, and a mixture thereof; more preferably microplastics, microfibers, and a mixture thereof; even more preferably microplastics.

The term "magnetic iron material" refers to any natural or synthetic solid substance, comprising at least one iron species and having magnetic properties, i.e., it is attracted by a magnet. In a particular embodiment, the magnetic iron material is inorganic. In a particular embodiment, the magnetic iron material is not coated, i.e., they are bare magnetic material particles. Preferably, the magnetic iron material has a magnetic saturation between 5 and 100 emu/g (between 5·10³ and 10⁵ A/m), more preferably between 30 and 90 emu/g (between 30·10³ and 90·10³ A/m), even more preferably between 65 and 90 emu/g (between 65·10³ and 90·10³ A/m), most preferably between 70 and 90 emu/g (between 70·10³ and 90·10³ A/m). The magnetic properties of the magnetic iron material can be determined using a magnetometer with a SQUID (superconducting quantum interference device) sensor. The magnetization (M) of the magnetic iron material is measured depending on the external magnetic field applied (H) in the range of -10000 to 10000 Oe (which is equivalent to -797700 to 797700 A/m) at room temperature. The magnetic saturation value of the material is that value of M reached when any subsequent increase in H does not cause an increase in the magnetization of the material. Preferably, the iron material has an iron content of at least 10% by weight with respect to the total weight of the material, preferably at least 20% by weight, more preferably at least 25% by weight, even more preferably at least 30% by weight, even more preferably at least 35% by weight, even more preferably at least 40% by weight, even more preferably at least 45% by weight, even more preferably at least 50% by weight, even more preferably at least 55% by weight, even more preferably at least 60% by weight, even more preferably at least 65% by weight. The percentage of iron can be determined using a total reflection x-ray fluorescence (TXRF) spectrometer, using Picofox S2 equipment (Bruker), with a molybdenum source. The process for preparing the sample can be by open vessel digestion using a solution of hydrochloric acid, nitric acid and hydrofluoric acid in a volume ratio of 6:2:0.5, at 105 °C for 1.5 h. The concentration of material in the vessel can be 1000 mg/L and a total volume of 10 mL can be used. If needed, the magnetic iron material can be previously ground to a size of less than 100 µm. Once the sample of material is digested, an internal gallium standard can be added in the solution for subsequent quantification. An aliquot of 3 µL of the resulting solution can be introduced in the spectrometer for analysis, which can be carried out at 50 kV and 600 µA with an acquisition time of 500 s. The integration of the peak corresponding to the iron in the spectrogram obtained allows determining the percentage of iron by weight contained in the material.

Preferably, the magnetic iron material comprises an iron species selected from the group consisting of Fe(II), Fe(III), metallic Fe, and a mixture thereof. One example would be magnetic iron minerals, such as magnetite (formed by ferrous-diferric oxide FeO·Fe₂O₃, sometimes formulated as Fe₃O₄), maghemite (γ-Fe₂O₃), ilmenite (FeTiOs) and pyrrhotite (Fe_{0.8-1}S), among others. In a preferred embodiment, the magnetic iron material is the mineral magnetite.

The use of magnetic iron minerals, particularly magnetite, is advantageous from the economic and environmental viewpoint because they are materials that are abundant, environmentally-friendly, and readily separated from the aqueous matrices.

The magnetic iron material is in the form of particles. The term "particle" refers to the magnetic iron material being in the form of powder or granules with an average diameter of less than 5 mm, preferably the average diameter of which is comprised between 0.05 µm and 5 mm, more preferably between 0.05 µm and 1 mm, even more preferably between 0.05 µm and 500 µm, even more preferably between 0.05 µm and 100 µm, even more preferably between 0.1 µm and 100 µm, even more preferably between 0.1 µm and 10 µm, even more preferably between 0.1 µm and 5 µm, even more preferably between 0.1 µm and 1 µm, even more preferably between 0.1 µm and 0.5 µm, most preferably between 0.1 µm and 0.3 µm. Preferably, the particle size distribution must be sufficiently narrow in the established size range. The determination of the magnetic iron material particle size and distribution can be performed by means of scanning electron microscopy, for example, using JEOL JSM 6335F equipment, with 10 X to 500,000 X magnification. The length and width of the microplastics are measured, and they are assigned the size of the largest dimension (length). The average diameter is defined as the average length (summation of lengths of the analyzed particles among the number of analyzed particles), with the length being the largest dimension of each magnetic iron material particle. The magnetic iron material particles can be obtained by means of grinding the material and later sieving in the size ranges described above. The size of the magnetic iron material particles refers to the average diameter of said particles determined in dry conditions, without considering the agglomeration of the magnetic material particles when suspended in an aqueous matrix.

The terms "aggregates of microplastic with magnetic iron material particles" or "microplastic-magnetic iron material aggregates" refer to a cluster of particles formed by microplastics and magnetic iron material particles, preferably, due to the interaction occurring between them. Likewise, the terms "aggregates of organic particles with magnetic iron material particles " or "organic particles-magnetic iron material aggregates" refer to a cluster of particles formed by organic particles and magnetic iron material particles due to the interaction occurring between them. Likewise, the terms "aggregates of non-plastic organic particles with magnetic iron material particles" or "non-plastic organic particles-magnetic iron material aggregates" refer to a cluster of particles formed by non-plastic organic particles and magnetic iron material particles due to the interaction occurring between them. The terms "aggregates of helminth eggs with magnetic iron material particles" or "helminth eggs-magnetic iron material aggregates" refer to a cluster of particles formed by helminth eggs and magnetic iron material particles due to the interaction occurring between them. Likewise, the terms "aggregates of microfiber particles with magnetic iron material particles" or "microfibers-magnetic iron material aggregates" refer to a cluster of particles formed by the microfibers and magnetic iron material particles due to the interaction occurring between them. This interaction is a physicochemical interaction.

In a preferred embodiment, in step a) aggregates of microplastics with magnetic iron material particles, aggregates of magnetic iron material with non-plastic organic particles, and aggregates of microfibers with magnetic iron material are provided. In a more preferred embodiment, in step a) aggregates of microplastics with magnetic iron material particles and aggregates of magnetic iron material with helminth eggs are provided. In another preferred embodiment, in step a) aggregates of microplastics with magnetic iron material particles and aggregates of microfibers with magnetic iron material are provided.

In another preferred embodiment, in step a) aggregates of microplastics with magnetic iron material particles are provided. In another preferred embodiment, in step a) aggregates of microfibers with magnetic iron material particles are provided.

Next, step b) of introducing the aggregates of step a) in an aqueous solution of a salt selected from the group consisting of alkaline metal bicarbonate, alkaline earth metal bicarbonate, ammonium bicarbonate, alkaline metal carbonate, ammonium carbonate, and a mixture of one or more of said salts, and wherein the concentration of said salt or its mixtures is at least 4 g/L to break up the aggregates, is performed.

In the context of the present invention, the expression "salt" refers to an ionic compound formed by an anion, such as bicarbonate (HCO₃⁻) or carbonate (CO₃²⁻), for example, and a cation, such as an alkaline or alkaline earth metal cation or the ammonium cation, for example, i.e., it includes alkaline metal bicarbonates, alkaline earth metal bicarbonates, ammonium bicarbonate, alkaline metal carbonates, and ammonium carbonate.

In the context of the present invention, the expression "alkaline metal" refers to a group I element in the periodic table, such as sodium, potassium, rubidium, cesium, and francium, preferably sodium and potassium.

In the context of the present invention, the expression "alkaline earth metal" refers to a group II element in the periodic table, such as beryllium, magnesium, calcium, strontium, barium, and radium, preferably magnesium and calcium.

In the context of the present invention, the expression "ammonium" refers to the NH₄⁺ cation.

In a preferred embodiment, the salt of the aqueous solution of step b) is selected from the group consisting of NaHCOs, KHCO₃, Na₂CO₃, K₂CO₃ and a mixture thereof; preferably NaHCOs, KHCO₃, Na₂CO₃, and a mixture thereof; more preferably NaHCOs.

Preferably, the concentration of salt/salts of the aqueous solution of step b) is selected based on the solubility of the salt/salts used in water. The concentration of the concentrated aqueous saline solution is at least 4 g/L. Preferably, the concentration of the salt in the aqueous solution of step b) is in the range of 4 g/L to 1700 g/L, preferably 60 g/L to 500 g/L, more preferably 60 g/L to 150 g/L, more preferably 60 g/L to 100 g/L, even more preferably 70 g/L to 100 g/L, most preferably of 80 g/L to 90 g/L.

In a preferred embodiment, the aqueous saline solution is an aqueous NaHCOs solution at a concentration of 70 g/L to 90 g/L.

In the context of the present invention, the expression "aqueous solution" refers to a solution containing more than 80% by weight of water with respect to the total weight of the solution, more preferably more than 85%, even more preferably more than 90%.

The aqueous solution of step b) further contains a salt selected from the group consisting of alkaline metal bicarbonate, alkaline earth metal bicarbonate, ammonium bicarbonate, alkaline metal carbonate, ammonium carbonate, and a mixture of one or more of said salts. In a particular embodiment, said aqueous solution of step b) consists of water and said salt or mixture of said salts.

In a preferred embodiment, the concentration of aggregates introduced in the aqueous saline solution of step b) is 1 mg/L to 2000 g/L, preferably 1 g/L to 1000 g/L, more preferably 1 g/L to 500 g/L, more preferably 1 g/L to 250 g/L, most preferably 1 g/L to 100 g/L.

In a preferred embodiment, the mixture obtained in step b) is subjected to stirring. Stirring favors the interaction of the aggregates of organic particles and/or microfibers with magnetic iron material with the aqueous solution. Stirring can be performed by means of any conventional method known to one skilled in the art, such as, for example, mechanical, magnetic, or ultrasound-assisted stirring, and more preferably mechanical stirring.

In a preferred embodiment, the time required for breaking up the aggregates of organic particles and/or microfibers with magnetic iron material using the aqueous solution of step b) is at least 30 seconds, preferably 30 s to 24 h, more preferably 30 s to 12 h, even more preferably 30 s to 6 h, even more preferably 30 s to 1 h, most preferably 1 min to 30 min.

In a particular embodiment, the process of the invention is performed discontinuously, i.e., in batches.

In a preferred embodiment, the process of the invention is performed continuously.

The next step, step c), is optional and consists of separating the magnetic iron material particles from the organic particles and/or microfibers by applying a magnetic field.

In a preferred embodiment, step c) is performed.

In said step c), the mixture obtained in step b) is subjected to separation by applying a magnetic field for the separation of the organic particles and/or microfibers.

The application of the magnetic field can be performed with a magnet.

In another preferred embodiment, the process further comprises filtering the resulting mixture after the separation of the magnetic iron material particles of step c). In said step c), the magnetic iron material particles have been separated by applying a magnetic field, the magnetic iron material particles being obtained on one hand and a mixture of organic particles and/or microfibers and the aqueous salt solution being obtained on the other. Said mixture of organic particles and/or microfibers and the aqueous salt solution can be filtered to separate the organic particles and/or microfibers from the aqueous salt solution. The filtration can be performed by means of conventional techniques, such as vacuum filtration.

As shown in the examples, the aqueous salt solution can advantageously be used again multiple times in a process for breaking up aggregates of magnetic iron material with organic particles and/or microfibers according to the present invention.

In a preferred embodiment, the process further comprises washing the magnetic material particles separated in step c).

In a preferred embodiment, the washing is performed with water or with an acidic aqueous solution.

In the context of the present invention, the expression "acidic aqueous solution" refers to an aqueous solution the pH of which is less than 7, preferably less than 4, more preferably less than 3. Acids suitable for being comprised in the acidic aqueous solution are, among others, mineral acids, such as nitric acid, hydrochloric acid, sulfuric acid, boric acid, phosphoric acid, hydrobromic acid, and hydroiodic acid, and organic acids, such as citric acid, acetic acid, maleic acid, fumaric acid, oxalic acid, succinic acid, tartaric acid, malic acid, mandelic acid, methanesulfonic acid, and p-toluenesulfonic acid; preferably nitric acid, hydrochloric acid, sulfuric acid, boric acid, citric acid, and acetic acid, more preferably nitric acid. Preferably, the concentration of acid in the acidic aqueous solution is 0.01 to 1.5 M, more preferably 0.05 to 1.0 M.

Said washing can be performed with water. It is preferably washed with a volume of 50 to 2000 mL of water per gram of aggregates of magnetic iron material with organic particles, more preferably 800 a 1200 mL. Preferably, a step of drying is not performed after washing. Particularly, a step of drying at a temperature above 40°C is not performed after washing.

Said washing can be performed with acidic aqueous solution. Washing is preferably performed with a volume of 5 to 2000 mL of acidic aqueous solution per gram of aggregates of magnetic iron material with organic particles, more preferably 5 to 100 mL. Preferably, a step of drying is not performed after washing. Particularly, a step of drying at a temperature above 40°C is not performed after washing. After washing, the acidic aqueous solution can be reused to perform new washes. Preferably, the washed magnetic material can be recovered by filtration techniques, centrifugal separation techniques, or by means of magnetic separation.

Advantageously, the washed magnetic material particles can be used again for the separation of organic particles and/or microfibers from aqueous matrices; said process for separation can be performed by following the processes described in the literature (ES 2 796 998A1 and WO 2020/240069 A1). As shown in the examples, said reuse can be performed multiple times, maintaining high yields for the separation of organic particles and/or microfibers from aqueous matrices.

In a particular embodiment, all the steps of the process of the present invention are performed at a temperature in the range of 5 to 85 °C, preferably 10 to 30 °C, more preferably 20 to 25 °C.

The organic particles, particularly microplastics, and/or microfibers obtained in step c), could be subjected to characterization for the purpose of knowing their composition, size and/or shape. Said characterization can be performed by means of different techniques for the purpose of knowing their composition (Fourier transform infrared spectroscopy (FTIR) and/or Raman spectroscopy), size (light microscopy and/or scanning electron microscopy or dynamic light scattering (DLS)), and shape (light microscopy and/or scanning electron microscopy).

In a second aspect, the invention relates to a process for breaking up aggregates of magnetic iron material with organic particles and/or microfibers by means of the use of an aqueous solution of a salt selected from the group consisting of alkaline metal bicarbonate, alkaline earth metal bicarbonate, ammonium bicarbonate, alkaline metal carbonate, ammonium carbonate, and a mixture of one or more of said salts, wherein the concentration of said salt or its mixtures is at least 4 g/L, and the reuse of said aqueous salt solution, the process comprising:
i) performing steps a)-c) of the process of the first aspect,
ii) filtering the resulting mixture after the separation of the magnetic iron material particles of step c) of the process of the first aspect to obtain the aqueous solution of a salt selected from the group consisting of alkaline metal bicarbonate, alkaline earth metal bicarbonate, ammonium bicarbonate, alkaline metal carbonate, ammonium carbonate, and a mixture of one or more of said salts, wherein the concentration of said salt or its mixtures is at least 4 g/L,
iii) providing aggregates of magnetic iron material with organic particles and/or microfibers, wherein the size of the organic particles is comprised in the range of 0.1 µm to 5 mm,
iv) introducing the aggregates of step iii) in the aqueous salt solution obtained in step ii) to break up the aggregates, and
v) optionally separating the magnetic iron material particles from the organic particles and/or microfibers by applying a magnetic field.

Step i), of carrying out steps a)-c) of the process of the first aspect are as defined above.

Step ii) is filtering the resulting mixture after the separation of the magnetic iron material particles of step c) of the process of the first aspect to obtain an aqueous solution of a salt selected from the group consisting of alkaline metal bicarbonate, alkaline earth metal bicarbonate, ammonium bicarbonate, alkaline metal carbonate, ammonium carbonate, and a mixture of one or more of said salts, wherein the concentration of said salt or its mixtures is at least 4 g/L. Said aqueous salt solution is as defined in the first aspect of the invention. As explained above, in said step c), the magnetic iron material particles have been separated by applying a magnetic field, with the magnetic iron material particles being obtained on one hand and a mixture of organic particles and/or microfibers and the aqueous salt solution being obtained on the other. Said mixture of organic particles and/or microfibers and the aqueous salt solution can be filtered to separate the organic particles and/or microfibers from the aqueous salt solution. The filtration can be performed by means of conventional techniques, such as vacuum filtration.

Step iii) is providing aggregates of magnetic iron material with organic particles and/or microfibers, wherein the size of the organic particles is comprised in the range of 0.1 µm to 5 mm. Said step is as defined for step a) of the process of the first aspect. The aggregates provided in step iii) correspond to a new or different batch of the aggregates provided in step i) of the second aspect, since said aggregates of step i) have previously been broken up in said step i).

Step iv) is introducing the aggregates of step iii) in the aqueous salt solution obtained in step ii) to break up the aggregates. Said step is as defined for step b) of the process of the first aspect, on the condition that the aqueous salt solution is the one that has been obtained in step ii).

Step v) is optional and consists of the separation of the magnetic iron material particles from the organic particles and/or microfibers by applying a magnetic field. Said step is as defined for step c) of the process of the first aspect.

In a third aspect, the invention relates to a process for breaking up aggregates of magnetic iron material with organic particles and/or microfibers and the reuse of the magnetic iron material, the process comprising:
A) performing steps a)-c) defined in the first aspect,
B) washing the magnetic material particles separated in step c), preferably wherein the washing is performed with water or with an acidic aqueous solution,
C) providing an aqueous matrix comprising organic particles and/or microfibers, wherein the size of the organic particles is comprised in the range of 0.1 µm to 5 mm,
D) adding the washed magnetic material particles obtained after step B) to the aqueous matrix provided in step C) to form aggregates of magnetic iron material with organic particles and/or microfibers, and
E) optionally separating the aggregates of magnetic iron material particles with organic particles and/or microfibers by applying a magnetic field.

Step A), of carrying out steps a)-c) of the process of the first aspect, are as defined above.

Step B) of washing the magnetic material particles separated in step c) is performed as defined above in the first aspect, preferably wherein the washing is performed with water or with an acidic aqueous solution as defined above in the first aspect.

Step C) is providing an aqueous matrix comprising organic particles and/or microfibers, wherein the size of the organic particles is comprised in the range of 0.1 µm to 5 mm. Said particles and microfibers are as defined above in the first aspect.

The expression "aqueous matrix" refers to a composition containing water as the majority component; it preferably contains at least 80% by weight of water with respect to the total weight of the composition, more preferably at least 85%, even more preferably at least 90%, even more preferably at least 95%. The aqueous matrix can further contain other ingredients whether they are dissolved (for example salts such as NaCl) or suspended. Particularly, the aqueous matrix is selected from the group consisting of wastewater (including domestic (including washing machine water), urban, industrial (including laundry water), agricultural, and livestock wastewater), sea water, river water, lake water, ground water, tap water or mixture thereof. To that end, waste water treatment plants, water purification plants, the agri-food industry (e.g., fish farms), water sources for human consumption, water facilities for recreational purposes (e.g., swimming pools), among others, are facilities of interest for the application of the process of the present invention. The aqueous matrix can contain salts, but their total concentration is less than 50 g/L. Particularly, the total concentration of alkaline metal bicarbonate, alkaline earth metal bicarbonate, ammonium bicarbonate, alkaline metal carbonate, ammonium carbonate, and a mixture of one or more of said salts is less than 0.5 g/L.

The aqueous matrix can be provided continuously if the process is performed continuously or can be provided in batches if the process is performed in batches (or discontinuously). In a preferred embodiment, the process is performed continuously.

The volume of the aqueous matrix provided in step C) is preferably 0.01 to 100000 L. Preferably, the temperature of the aqueous matrix must be between 5 and 85 °C, more preferably between 15 and 70 °C, even more preferably between 20 and 50 °C, most preferably about 25 °C.

The next step, step D), is the addition of the washed magnetic material particles obtained after step B) to the aqueous matrix provided in step C) to form aggregates of magnetic iron material with organic particles and/or microfibers.

The addition of the magnetic iron material particles to the aqueous matrix can be performed continuously if the process is performed continuously or can be performed discontinuously if the process is performed discontinuously (or in batches).

In a preferred embodiment, the process of the invention is performed continuously.

In a preferred embodiment, the amount of magnetic iron material particles (by weight) added to the aqueous matrix in step D) is 0.1 to 200 the amount of total suspended solids comprising organic particles and/or microfibers (by weight) present in the aqueous matrix provided in step C), more preferably 0.1 to 100, more preferably 0.5 to 50, more preferably 0.5 to 20, even more preferably 1 to 10, most preferably 2 to 7. To determine the amount of magnetic iron material to be added, an aliquot of the aqueous matrix can be taken and the amount of total solids contained therein, including the organic particles and/or microfibers, can be determined. The aliquot of the aqueous matrix can first be passed through a sieve with a mesh size of 5 mm, to remove the solids of the largest size, and the solids of the smallest size are then separated from the filtered aqueous matrix. This involves the prior separation of the total solids, including the organic particles and/or microfibers, from the aqueous matrix by means of vacuum filtration using a microporous membrane filter with a pore size of not more than 0.1 µm (the total solids taken into account to evaluate the amount of magnetite to be added have the smallest dimension thereof of a size not more than 0.1 µm), and their subsequent drying is either at room temperature or in an oven at a temperature of not more than 100°C. The filter containing the total suspended solids, including the organic particles and/or microfibers, is then weighed on a precision balance and the mass thereof is determined by difference of weighing with the same filter before performing the process for separating the organic particles and/or microfibers.

In a preferred embodiment, the mixture obtained in step D) is subjected to stirring. Stirring favors the interaction of the organic particles and/or microfibers and the magnetic iron material particles to form aggregates. Stirring can be performed by means of any conventional method known to one skilled in the art, such as, for example, mechanical, magnetic, or electrostatic stirring, and more preferably mechanical stirring.

In a particular embodiment, the mixture obtained in step D) is kept in contact, preferably with stirring, for a time from 15 seconds to 10 min, more preferably from 15 seconds to 5 minutes, most preferably about 30 seconds to 1 minute.

Once the aggregates are formed, they are optionally separated from the aqueous matrix in step E) by means of applying a magnetic field.

Said magnetic field can be generated with a permanent magnet, an electromagnet, or on/off switchable magnet, preferably by means of a permanent magnet.

Once the aggregates are separated from the aqueous matrix, the magnetic iron material particles can be recovered from said aggregates by performing the process of the first aspect and can be used again in the process of the third aspect. Furthermore, the process for recovering the aggregates of the first aspect comprises the use of an aqueous solution of a salt selected from the group consisting of alkaline metal bicarbonate, alkaline earth metal bicarbonate, ammonium bicarbonate, alkaline metal carbonate, ammonium carbonate, and a mixture of one or more of said salts, wherein the concentration of said salt or its mixtures is at least 4 g/L. Advantageously, said aqueous salt solution can also be reused in a process according to the second aspect.

Therefore, the invention also relates to a process for breaking up aggregates of magnetic iron material with organic particles and/or microfibers by means of the use of an aqueous solution of a salt selected from the group consisting of alkaline metal bicarbonate, alkaline earth metal bicarbonate, ammonium bicarbonate, alkaline metal carbonate, ammonium carbonate, and a mixture of one or more of said salts, wherein the concentration of said salt or its mixtures is at least 4 g/L, the reuse of said aqueous salt solution, and the reuse of the magnetic iron material, the process comprising:
1) performing steps a)-c) of the process of the first aspect,
2) filtering the mixture resulting after the separation of the magnetic iron material particles of step c) of the process of the first aspect to obtain the aqueous solution of a salt selected from the group consisting of alkaline metal bicarbonate, alkaline earth metal bicarbonate, ammonium bicarbonate, alkaline metal carbonate, ammonium carbonate, and a mixture of one or more of said salts, wherein the concentration of said salt or its mixtures is at least 4 g/L, and magnetic iron material particles,
3) washing the magnetic material particles separated in step 2), preferably wherein the washing is performed with water or with an acidic aqueous solution,
4) providing an aqueous matrix comprising organic particles and/or microfibers, wherein the size of the organic particles is comprised in the range of 0.1 µm to 5 mm,
5) adding the washed magnetic material particles obtained after step 3) to the aqueous matrix provided in step 4) to form aggregates of magnetic iron material with organic particles and/or microfibers,
6) separating the aggregates of magnetic iron material particles with organic particles and/or microfibers by applying a magnetic field,
7) introducing the aggregates separated in step 6) in the aqueous salt solution obtained in step 2) to break up the aggregates, and
8) optionally separating the magnetic iron material particles from the organic particles and/or microfibers of step 7) by applying a magnetic field.

Each of said steps 1) to 8) is performed as previously explained in the present document.

In a fourth aspect, the invention relates to the use of the process for breaking up aggregates of magnetic iron material with organic particles, particularly microplastics, and/or microfibers according to the first aspect for the recovery of the magnetic iron material and/or the recovery of the aqueous solution of a salt selected from the group consisting of alkaline metal bicarbonate, alkaline earth metal bicarbonate, ammonium bicarbonate, alkaline metal carbonate, ammonium carbonate, and a mixture of one or more of said salts.

The magnetic iron material can be used again in the separation of organic particles, particularly microplastics, and/or microfibers, as defined above.

The aqueous solution of a salt selected from the group consisting of alkaline metal bicarbonate, alkaline earth metal bicarbonate, ammonium bicarbonate, alkaline metal carbonate, ammonium carbonate, and a mixture of one or more of said salts can be used again in breaking up aggregates of magnetic iron material with organic particles, particularly microplastics, and/or microfibers according to the process defined in the first aspect of the invention.

The process of the first aspect can also be used for the characterization of the organic particles, particularly microplastics, and/or the microfibers.

Illustrative examples disclosing the features and advantages of the invention are described below; however, they must not be interpreted as being limiting of the object of the invention as defined in the claims.

### Examples

### Materials and methods

### Determination of the microplastic particle size

In the present invention, the microplastics (MPs) and the microfibers were added to the aqueous matrix to subsequently carry out their magnetic separation by means of the process described in the specification of patent document ES 2796998 A1.

The starting plastic materials are subjected to a cryogenic grinding process to reduce their size until obtaining MPs. This process consists of introducing the previously cut plastics in a grinding container with a steel ball and continuously cooled with liquid nitrogen by the built-in refrigeration system before and during the grinding process to keep the temperature constant at -196 °C. The sample is embrittled and the plastics are ground by impact and friction effects with a frequency of 30 Hz.

The microplastic particle size range is previously determined by means of sieving using 250 ppm, 100 ppm, and 50 ppm sieves, such that work is performed with the particles which are between 100-250 ppm. The microplastic size is measured by means of scanning electron microscopy. In this case, a JEOL JSM 6335F microscope, with 10X to 500,000X magnification, was used. The length and diameter of the MPs are measured with the imaged program; the length and width of the microplastics are measured, and they are assigned the size of the largest dimension (length).

For the microfibers, first the cryogenic grinding mentioned hereinabove is performed. Subsequently, the microfiber size is measured by means of scanning electron microscopy. In this case, a JEOL JSM 6335F microscope, with 10X to 500,000X magnification, was used. The length and diameter of the microfibers are measured with the imaged program; the length is calculated as the average of the dimensions of the largest size of the microfibers (summation of dimensions of the largest size of each of the analyzed microfibers among the number of analyzed microfibers) and they are assigned the size of the largest dimension (length). Moreover, the dimension of the smallest size (diameter) of the microfibers is calculated as the average of the dimensions of the smallest size of the microfibers (summation of dimensions of the smallest size of each of the analyzed microfibers among the number of analyzed microfibers). The aspect ratio refers to the quotient between the length of the microfiber and the diameter of the microfiber.

### Determination of the percentage of iron

The composition of the magnetite has been evaluated by means of different analysis techniques. The iron content was determined by means of total reflection x-ray fluorescence (TXRF) spectrophotometry, namely using the Picofox S2 model (Bruker), with a molybdenum source. The iron content by weight determined is 73%. The presence of other elements was virtually negligible (Cr: 0.1%; Mn: 0.3%; Zn: 0.6%; Ni:<0.01%; Cu:<0.01%; As:<0.01%). Moreover, the elemental analysis of the magnetite sample was performed, with the following mean values of carbon (0.35%), hydrogen (0.28%), nitrogen (0.04%), and sulfur (0.14%) being obtained.

### Determination of the magnetic iron material particle size

The magnetic iron material particle size (average diameter) and particle distribution were determined by means of the scanning electron microscopy analysis of the dry material. The equipment used was a JEOL JSM 6335F, with 10X to 500,000X magnification. The length and width of the magnetic iron material particles are measured, and they are assigned the size of the largest dimension (length). The magnetic iron material particles have a spherical shape, with a slightly rough surface.

### Surface area

The surface area of magnetite was determined by means of performing nitrogen adsorption-desorption isotherms, with a mean value of 8 m² g⁻¹ being obtained. This value shows the low porosity of the material, which is consistent with the fact that it is a natural mineral, the surface area of which can be considered virtually negligible.

### X-ray diffraction

Powder x-ray diffraction (PXRD) was used to perform the identification and characterization of the crystalline phases present in the magnetic iron material. The secondary graphite monochromator and a Xe gas detector. A theta/2theta scan was performed with a 2 range of 10 to 80°, an angular increment of 0.04°, and an accumulation time of 4s. Prior to analysis, the magnetic iron material particles were ground, if necessary, to a size smaller than 100 µm. For the identification of the crystalline phases present in the obtained diffractograms, the High Score Plus software and the ICDD (International Centre for Diffraction Data) PDF-4 Full File crystallographic database were used.

The crystal structure of the magnetite material used precisely matches that of pure magnetite. The sample has all the peaks representative of the magnetite pattern, at 2θ = 18.29°; 30.10°; 35.45°; 43.07°; 53.44°; 56.92°; 62.56°, and 74.00°.

### Determination of magnetic saturation

The magnetic properties of the magnetic iron material were measured using a Quantum Design MPMS XL-5 magnetometer with a SQUID (superconducting quantum interference devices) sensor. If necessary, the magnetic iron material was previously ground to a size smaller than 100 µm. The magnetic moment (M) of the magnetic iron material was measured depending on the applied external magnetizing field (H) in the range of -10000 to 10000 Oe (equivalent to -797700 to 797700 A m⁻¹ in the SI) at room temperature. The magnetic saturation value is that value of M that is reached when any subsequent increase in H does not cause an increase in the magnetization of the material. The magnetic saturation value obtained is 77.7 emu g⁻¹. The sample can be instantly removed from water by means of applying a magnetic field, such as a magnet.

### Assay conditions of the examples

Different types of microplastics, such as polystyrene (PS) and polyethylene (PE) microplastics, have been used. Likewise, they have been used in a size range of 100-250 µm. Polyester fibers in a size range of 300 µm in length and 19 µm in diameter have been used. A magnetic iron mineral, ground magnetite with a mean particle diameter of 0.2 µm when dry, was used to perform the process for separation. The crystalline nature of the magnetite used was confirmed by means of X-ray diffraction analysis, which also shows that the only phase present in the solid is magnetite (Fe₃O₄). The percentage of iron in the magnetic mineral used was within the range of 68 to 78% by weight. In turn, the magnetic saturation value of the material was in the range of 70 to 90 emu/g, which corresponds with 70 10³ to 90 10³ A/m in international system units.

### Example 1. Breaking up microplastics-magnetic iron material aggregates and reuse of Fe₃O₄ by means of the treatment thereof with a saline solution

The experiments for breaking up microplastic-magnetic iron material aggregates were carried out after forming the aggregates obtained by following the processes described in the literature (ES 2 796 998 A1 and WO 2020/240069 A1). The researchers used NaHCO₃ salt at a concentration in water of 84 g/L for breaking up the aggregate. To that end, 20 mg of PS, 40 mg of Fe₃O₄ in 20 mL of water have been used. The microplastics, the magnetic iron material, and the water were introduced in a glass vial and stirred manually for 1 minute. Subsequently, a magnetic field generated by a magnet was applied to separate the microplastics-magnetic iron material aggregates from the water. The microplastics-magnetic iron material aggregates were then resuspended in 20 mL of a solution of NaHCOs in water at a concentration of 84 g/L (density of 1.06 g/cm³). The sample was stirred mechanically for 15 minutes and subsequently placed in an ultrasound bath for another 20 minutes. After the experiment, floating particles are removed by means of the use of magnetic field and filtration of the supernatant. The magnetic iron material is thereby retained by the magnet while the organic particles can be removed. The rest of the content of the vial containing the magnetic iron material was finally washed with 1 L of water. Then, said magnetic iron material was used again for the separation of polystyrene microplastics from a synthetic aqueous matrix. 20 mg of microplastics and 40 mg of the reused magnetic iron material in a volume of 20 mL were used following the process described above. All the assays were performed in triplicate at room temperature (20 - 25°C).

Table 1 shows the results obtained in breaking up the microplastic-magnetic iron material aggregates. It is observed that reused magnetite allows reaching the same yield in the separation of PS microplastics as fresh magnetite, which demonstrates the effectiveness of the salt for the recovery treatment.

**Table 1. Reuse of Fe₃O₄ recovered by treatment with an NaHCOs solution**

| *PS microplastic (mg)* | *Reused magnetite (mg)* | *Yield in the separation* of *PS microplastics (%)* |
|---|---|---|
| 20 | 40 | >99 |

### Example 2. Process for breaking up the microplastics-magnetic iron material aggregate by means of the treatment thereof with different saline solutions

In this example, the researchers have used optimal salts from the assays of breaking up aggregates described in patent document WO 2020/240069 (NaH₂PO₄ and NaCl) in addition to one of the salts according to the process of the present invention (NaHCOs).

**Table 2. Salts under study and their properties**

| | *NaHCO₃* | *NaH₂PO₄* | *NaCl* |
|---|---|---|---|
| Solubility in water (g/L) | 103 | 1103 | 360 |
| Density (g/L) | 2.20 | 2.36 | 2.16 |
| Molecular weight (g/mol) | 84.01 | 119.98 | 58.44 |

In this experiment, it was decided to prepare solutions of each of the salts in water at a concentration of 0.95 M, so that all the solutions have the same moles of the salt.

**Table 3. Preparation of the saline solutions.**

| | *NaHCO₃* | *NaH₂PO₄* | *NaCl* |
|---|---|---|---|
| *Mass (g)* | 16.8 | 22.7 | 11.1036 |
| *Volume (mL)* | 200 | 200 | 200 |
| *Concentration (M)* | 0.95 | 0.95 | 0.95 |
| *Concentration (g*/*L)* | 84 | 113.5 | 55 |
| *pH* | 8.38 | 4.23 | 6.73 |

The experiments of breaking up microplastics-magnetic iron material aggregates were carried out after the experiment for the magnetic separation of said particles following the same process described in Example 1. 20 mg of microplastics, 40 mg of magnetic iron material in a volume of 20 mL of water, were used. The separation of the microplastics was greater than 99.0%. The microplastics-magnetic iron material aggregates were resuspended in 20 mL of the different saline NaHCO₃, NaH₂PO₄, and NaCl solutions. It is manually stirred for two minutes and left to stand. Pictures are taken every 5 minutes to see their evolution in breaking up the aggregate. A magnet is subsequently placed in the lower part of the vial to see if the aggregate has been suitably broken up and to see if the microplastics which are on the surface are attracted to the magnet (a picture is taken). Finally, with the help of the magnet the supernatant is filtered to be able to calculate the microplastics recovery yield with each salt under the same conditions. When the supernatants are filtered, they are subsequently washed with 2 L of hot water to dissolve all salt and so that there are no errors in the weighing measurement of the filters.

Table 4 shows the results obtained for the percentage of recovery of clean microplastic (free of magnetic material). With the results of the assay, it can be observed that, for these concentrations of salt, breaking up the aggregate is only effective with NaHCO₃ and NaH₂PO₄, while for NaCl salts a good recovery of clean microplastics is not obtained since it can be observed how the aggregate is not broken up and the microplastics are still coated with magnetite and attracted by the magnetic field.

**Table 4. Results obtained from breaking up the aggregates with the different salts.**

| *PE (mg)* | *Fe₃O₄ (mg)* | *Salts* | *Recovery of clean MPs* |
|---|---|---|---|
| 20 | 40 | NaHCO₃ (0.95 M) | 99.5% |
| | | NaH₂PO₄ (0.95 M) | 93.4% |
| | | NaCl (0.95 M) | < 50% |

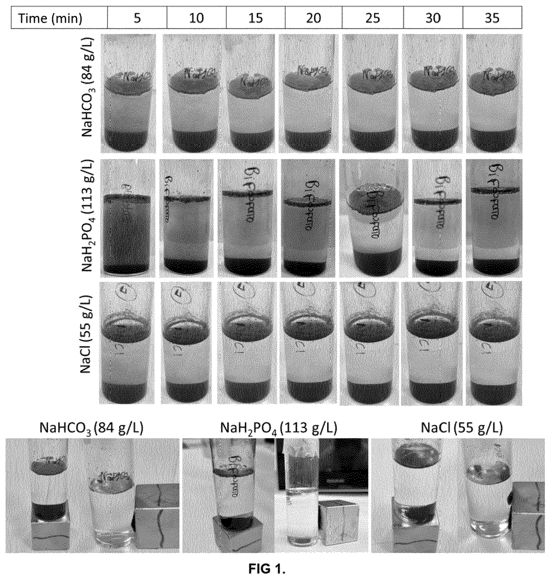

Figure 1 shows how they are separated over time with different salts. As observed, biphosphate and bicarbonate are the best options at the same concentration. However, sodium chloride does not break up the aggregate at this concentration of salt and it subsequently adheres to the magnet again. As a result, it would not be a good candidate using that concentration.

Therefore, the decision was made to discard the NaCl salt and focus on other salts to observe the reuse of magnetite.

### Example 3. Efficiency, washing and reuse of the magnetic iron material recovered by treatment with saline solutions

Experiments for the reuse of the magnetic iron material were carried out after the experiment for magnetic separation of polyethylene microplastics contained in a synthetic aqueous matrix. To give rise to the formation of microplastic-magnetic iron material aggregates, the process described in Example 1 was followed using 20 mg of microplastics and 40 mg of magnetic iron material in a volume of 20 mL of water.

The separation of the polyethylene microplastics was performed by means of the formation of microplastic-magnetic iron material aggregates and the subsequent application of a magnetic field. The aggregate was then subjected to the process for breaking up the aggregates, according to the process described in Example 2.

The magnetic iron material recovered after treatment with the saline solution (NaHCOs, NaH₂PO₄, and NaCl) was washed with 1 L of water by means of stirring with a pipette and was used continuously, i.e., without the magnetic iron material being subjected to any other thermal or mechanical process. Said magnetic material was used again for the separation of polyethylene microplastics from a synthetic aqueous matrix. 20 mg of microplastics (PE) and the reused magnetic iron material in a volume of 20 mL of water were used following the process described in Example 1. The results obtained are shown in Table 5. This process was performed up to 10 times in the case of NaHCOs, while for NaH₂PO₄ and NaCl, it had to be stopped before that.

**Table 5. Reuse of Fe₃O₄ recovered by treatment with different saline solutions.**

| Reused magnetite (mg) | PE (mg) | Salts | No. of cycles of the reuse of the magnetite | Formation of an aggregate again | MP capture efficiency with the reused magnetite (%) |
|---|---|---|---|---|---|
| 40 | 20 | NaHCO₃ (0.95 M) | 1 | Yes | > 95 |
| | | | 2 | Yes | > 95 |
| | | | 3 | Yes | > 95 |
| | | | 4 | Yes | > 95 |
| | | | 5 | Yes | > 95 |
| | | | 6 | Yes | > 95 |
| | | | 7 | Yes | > 95 |
| | | | 8 | Yes | > 95 |
| | | | 9 | Yes | > 95 |
| | | | 10 | Yes | > 95 |
| | | NaH₂PO₄ (0.95 M) | 1 | No | - |
| | | NaCl (0.95 M) | 1 | No | - |

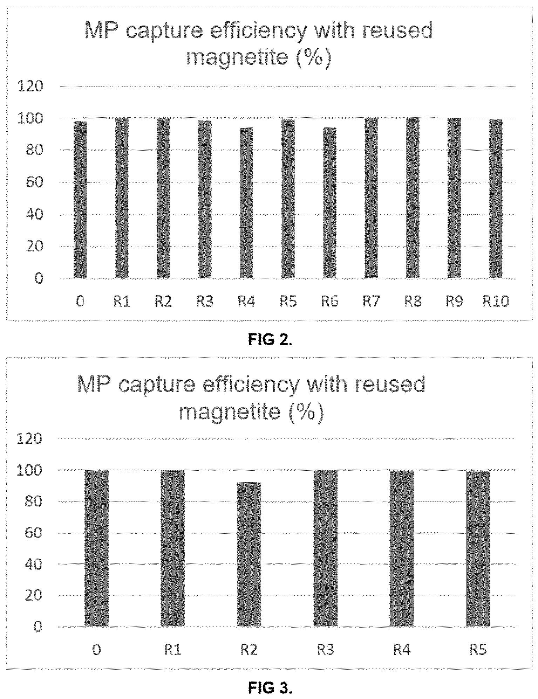

Figure 2 shows the efficiency of the reuse of the magnetic iron material when it is subjected to breaking up the aggregate with the NaHCO₃ solution and the subsequent treatment thereof with abundant water, being reused up to at least 10 times, maintaining an efficiency > 95%.

The researchers surprisingly discovered by means of these results that washing with 1 L of water to reuse magnetite after breaking up the aggregate is only effective for bicarbonate. It would be furthermore expected to be effective for all the salts considering that sodium biphosphate salt and NaCl have a higher solubility than that of bicarbonate. However, the results show that only one step of washing with water is not enough for the reuse of magnetite when the salt used is sodium biphosphate or sodium chloride.

### Example 4. Reuse of the magnetic material and of the saline solution used for breaking up the aggregate

Assays have been performed to reuse the saline solution used for breaking up the aggregate for the purpose of developing a zero-waste process. To that end, it has been carried out by means of two methodologies. On one hand, the cleaning of magnetite with water as in Example 3 and, on the other, washing magnetite with 0.08 M aqueous HNO₃ have been studied.

For the reuse of magnetite and solution of NaHCOs salt in water, 20 mg of MPs (in this case PE), 40 mg of magnetite in 15 mL of water are used to form the aggregate. The separation of the polyethylene microplastics was performed by means of the formation of microplastic-magnetic iron material aggregates and the subsequent application of a magnetic field. The aggregate was then subjected to the process for breaking up the aggregates, according to the process described in Example 2, introducing the aggregates in 15 mL of a solution of 84 g/L of NaHCOs in water to break them up. It is then subjected to the application of a magnetic field to retain the magnetic iron particles and the supernatant is filtered, with the MPs being retained in the filter and the NaHCOs solution which will subsequently be reused being retained in the filtrate. The magnetic material is then washed with 1 L of water as in Example 3 for subsequent reuse.

Said magnetic material was used again for the separation of polyethylene microplastics from a synthetic aqueous matrix. 20 mg of new microplastics and the reused magnetic iron material in a volume of 15 mL of water were used following the process described in Example 1. The aggregate was then subjected to the process for breaking up the aggregates, according to the process described in Example 2. In this reuse, to break up the aggregate, the previously filtered saline NaHCO₃ solution is reused.

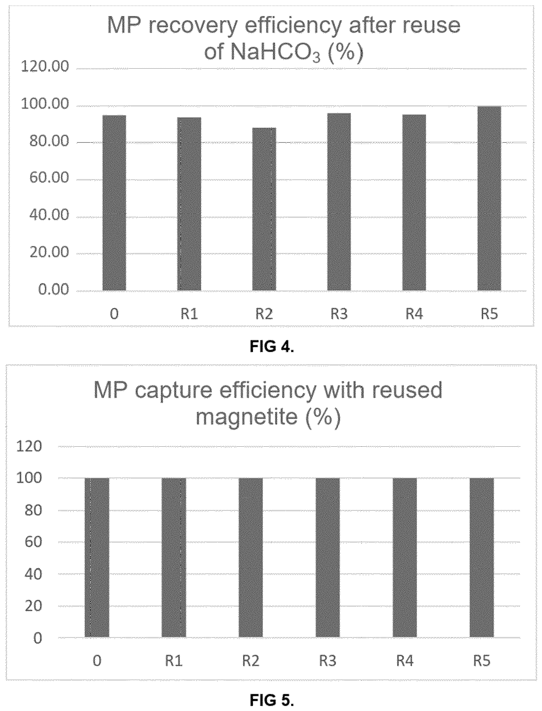

This assay is performed 5 times reusing both the magnetic iron material and the saline solution for breaking up the aggregate. As can be observed in Figure 3, a 99% reuse efficiency of the magnetic iron material is obtained using the process proposed in the assay. Furthermore, in Figure 4, it is demonstrated that it is possible to reuse the salt up to at least 5 times to be able to break up the aggregate.

For the reuse of the magnetite and the NaHCOs salt by washing with nitric acid (HNO₃, 0.08 M), 0.5 g of MPs (in this case PE), 1 g of magnetite in 40 mL of water are used to form the aggregate. The separation of the polyethylene microplastics was performed by means of the formation of microplastic-magnetic iron material aggregates and the subsequent application of a magnetic field. The aggregate was then subjected to the process for breaking up the aggregates, according to the process described in Example 2.

It is subsequently introduced in 40 mL of a solution of 84 g/L of NaHCOs in water. The aggregate is broken up, and the solution of NaHCOs that will subsequently be reused as described in Example 3 is filtered. The magnetic material is then washed with 13 mL of a solution of HNO₃ in water (0.08 M). To that end, the solution is added to the magnetic iron material and manually stirred for two minutes. Subsequently, with the help of a magnetic field, the magnetic material is retained and the supernatant is collected, leaving the magnetic iron material ready for reuse.

Said magnetic material was used again for the separation of polyethylene microplastics from a synthetic aqueous matrix. 0.5 g of microplastics and the reused magnetic iron material in a volume of 40 mL were used following the process described in Example 1. The aggregate was then subjected to the process for breaking up the aggregates, according to the process described in Example 2. In this reuse, to break up the aggregate, the previously filtered saline NaHCO₃ solution is reused.

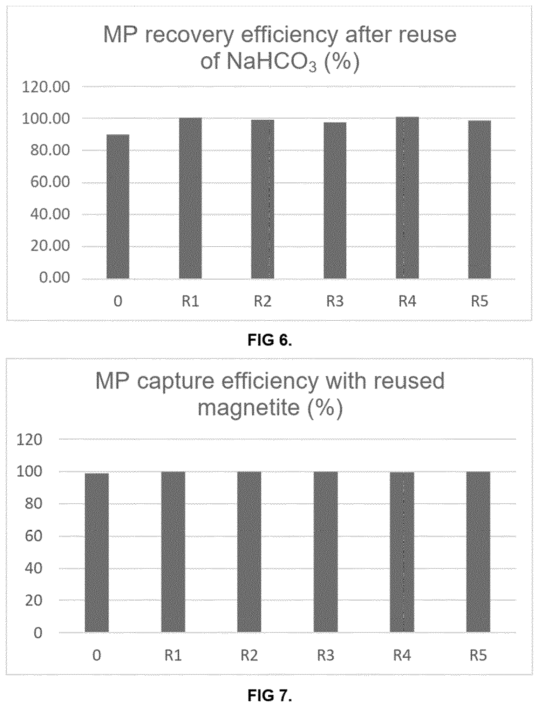

This assay is performed 5 times reusing both the magnetic iron material and the saline solution for breaking up the aggregate. As can be observed in Figure 5, a 99% reuse efficiency of the magnetic iron material is obtained using the process proposed in the assay. Furthermore, in Figure 6 it is demonstrated that it is possible to reuse the salt up to at least 5 times to be able to break up the aggregate.

### Example 5: Breaking up the aggregate and reuse of magnetic material with a family of alkaline salts

More assays have been performed, testing other salts from the same carbonate family. Group I alkaline salts are chosen. The results with potassium bicarbonate (KHCO₃) and sodium carbonate (Na₂CO₃) are shown in this case. In both cases, the same methodology is carried out.

Experiments for the reuse of the magnetic iron material were carried out after the experiment for magnetic separation of polyethylene microplastics contained in a synthetic aqueous matrix. To give rise to the formation of microplastic-magnetic iron material aggregates, the process described in Example 1 was followed using 20 mg of microplastics and 40 mg of magnetic iron material in a volume of 15 mL of water.

The separation of the polyethylene microplastics was performed by means of the formation of microplastic-magnetic iron material aggregates and the subsequent application of a magnetic field. The aggregate was then subjected to the process for breaking up the aggregates, according to the process described in Example 2. The microplastic-magnetic iron material aggregate was introduced in 15 mL of an aqueous solution of 94 g/L of KHCO₃ (pH = 7.66; d = 1.068 g/cm³), or 107.8 g/L of Na₂CO₃ (pH = 12.33; d = 1.1087 g/cm³).

The magnetic iron material recovered after treatment with the saline solution (KHCO₃ or Na₂CO₃) was washed with 1 L of water by means of stirring with a pipette and was used continuously. Said magnetic material was used again for the separation of polyethylene microplastics from a synthetic aqueous matrix. 20 mg of microplastics and the reused magnetic iron material in a volume of 15 mL were used following the process described in Example 1.

Figure 7 shows the results obtained for the microplastic capture efficiency with the reused magnetic iron material when using the saline KHCO₃ solution for breaking up the aggregate and subsequently washing with water. It is observed to have a 99% efficiency.

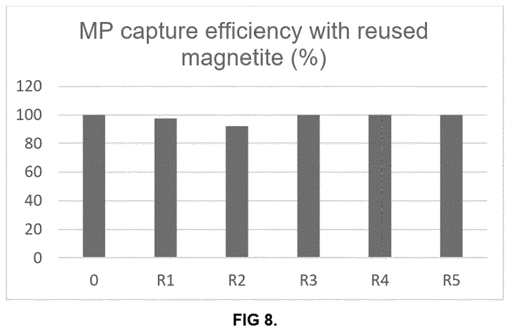

Figure 8 shows the results obtained for the microplastic capture efficiency with the reused magnetic iron material when using the saline Na₂CO₃ solution for breaking up the aggregate and subsequently washing with water. It is observed to have a 99% efficiency.

Both salts can be used for breaking up the aggregates and for the reuse of the magnetic iron material.

### Example 6: Breaking up the aggregate and reuse of the magnetic material and the saline solution used

Assays have been performed to reuse the saline solution used for breaking up the aggregate for the purpose of developing a zero-waste process.

For the reuse of the magnetite and the NaHCOs salt by washing with nitric acid (HNO₃, 0.08 M), 20 mg of MPs (in this case PE), 40 mg of magnetite in 15 mL of water are used to form the aggregate. The separation of the polyethylene microplastics was performed by means of the formation of microplastic-magnetic iron material aggregates and the subsequent application of a magnetic field. The aggregate was then subjected to the process for breaking up the aggregates, according to the process described in Example 2.

It is subsequently introduced in 15 mL of a solution of 25 g/L of NaHCOs in water. The aggregate is broken up, and the solution of NaHCOs that will subsequently be reused as described in Example 3 is filtered. The magnetic material is then washed with 10 mL of a solution of HNO₃ in water (0.08 M). To that end, the solution is added to the magnetic iron material and manually stirred for two minutes. Subsequently, with the help of a magnetic field, the magnetic material is retained and the supernatant is collected, leaving the magnetic iron material ready for reuse.

Said magnetic material was used again for the separation of polyethylene microplastics from a synthetic aqueous matrix. 20 mg of microplastics and the reused magnetic iron material in a volume of 15 mL were used following the process described in Example 1. The aggregate was then subjected to the process for breaking up the aggregates, according to the process described in Example 2. In this reuse, to break up the aggregate, the previously filtered saline NaHCO₃ solution is reused.

This assay is performed reusing both the magnetic iron material and the saline solution for breaking up the aggregate. As can be observed in Table 6, a 99% reuse efficiency of the magnetic iron material is obtained using the process proposed in the assay. Furthermore, in Table 6, it is demonstrated that it is possible to reuse the salt to be able to break up the aggregate.

**Table 6. Reuse of Fe₃O₄ and NaHCO₃**

| *PE microplastic (mg)* | *Reused magnetite (mg)* | *Yield in the separation of PE microplastics (%)* | *MP recovery efficiency after the reuse of NaHCO₃ (%)* |
|---|---|---|---|
| 20 | 40 | >99 | >88 |

### Example 7: Breaking up the magnetic material-microfiber aggregate and reuse of the magnetic material and the saline solution used

Experiments for the reuse of the magnetic iron material were carried out after the experiment for magnetic separation of polyester microfibers (MFs) contained in a synthetic aqueous matrix. To give rise to the formation of microplastic/magnetic iron material aggregates, the process described in Example 1 was followed using 20 mg of microfibers and 40 mg of magnetic iron material in a volume of 15 mL of water.

The separation of the polyester microfibers was performed by means of the formation of microplastic-magnetic iron material aggregates and the subsequent application of a magnetic field.

The aggregate was then subjected to the process for breaking up the aggregates, according to the process described in Example 2. The aggregate is introduced in 15 mL of a solution of 84 g/L of NaHCOs in water. The aggregate is broken up, and the solution of NaHCOs that will subsequently be reused as described in Example 3 is filtered. The magnetic material is then washed with 10 mL of a solution of HNO₃ in water (0.08 M). To that end, the solution is added to the magnetic iron material and manually stirred for two minutes. Subsequently, with the help of a magnetic field, the magnetic material is retained and the supernatant is collected, leaving the magnetic iron material ready for reuse.

This assay is performed reusing both the magnetic iron material and the saline solution for breaking up the magnetic material-microfiber aggregate. As can be observed in Table 7, a > 99% reuse efficiency of the magnetic iron material is obtained using the process proposed in the assay. Furthermore, in Table 7, it is demonstrated that it is possible to reuse the salt to be able to break up the aggregate.

**Table 7. Efficiency of breaking up the magnetic iron material/microfiber aggregate and the reuse of Fe₃O₄ and NaHCO₃**

| *Polyester microfiber (mg)* | *Reused magnetite (mg)* | *Yield in the separation of polyester microfibers (%)* | *MF recovery efficiency after the reuse of NaHCO₃ (%)* |
|---|---|---|---|
| 20 | 40 | >99 | 80 |

## Claims

1. A process for breaking up aggregates of magnetic iron material with organic particles and/or microfibers, the process comprising:
a) providing the aggregates of magnetic iron material with organic particles and/or microfibers, wherein the size of the organic particles is comprised in the range of 0.1 µm to 5 mm,
b) introducing the aggregates of step a) in an aqueous solution of a salt selected from the group consisting of alkaline metal bicarbonate, alkaline earth metal bicarbonate, ammonium bicarbonate, alkaline metal carbonate, ammonium carbonate, and a mixture of one or more of said salts, and wherein the concentration of said salt or its mixtures is at least 4 g/L, to break up the aggregates, and
c) optionally separating the magnetic iron material particles from the organic particles and/or microfibers by applying a magnetic field.

2. The process according to claim 1, wherein the organic particles are microplastics and/or microfibers; preferably wherein the microplastics are selected from the group consisting of polystyrene, polyethylene, and mixtures thereof, and/or the microfibers are polyester microfibers.

3. The process according to any of the preceding claims, wherein the organic particles have a size in the range of 0.1 µm to 1 mm, preferably 0.1 µm to 500 µm, more preferably 100 µm to 500 µm, even more preferably 100 µm to 250 µm.

4. The process according to any of the preceding claims, wherein the salt of the aqueous solution of step b) is selected from the group consisting of NaHCOs, KHCO₃, Na₂CO₃, K₂CO₃, and a mixture thereof; preferably NaHCO₃.

5. The process according to any of the preceding claims, wherein the concentration of salt of the concentrated aqueous saline solution of step b) is in the range of 4 g/L to 1700 g/L.

6. The process according to any of the preceding claims, wherein the magnetic iron material comprises an iron species selected from the group consisting of Fe(II), Fe(III), metallic Fe, and a mixture thereof; preferably magnetite.

7. The process according to any of the preceding claims, wherein the average diameter of the magnetic iron material is comprised between 0.1 µm and 100 µm; preferably between 0.1 µm and 0.3 µm.

8. The process according to any of the preceding claims, wherein the concentration of aggregates introduced in the concentrated aqueous saline solution in step b) is 1 mg/L to 2000 g/L, preferably 1 g/L to 1000 g/L, more preferably 1 g/L to 500 g/L, more preferably 1 g/L to 250 g/L, most preferably 1 g/L to 100 g/L.

9. The process according to any of the preceding claims, wherein the mixture resulting from step b) is subjected to stirring.

10. The process according to any of the preceding claims, wherein step c) is performed.

11. The process according to claim 10, further comprising washing the magnetic material particles separated in step c), preferably wherein the washing is performed with water or with an acidic aqueous solution.

12. The process according to any of claims 1 to 11, further comprising filtering the resulting mixture after the separation of the magnetic iron material particles of step c).

13. A process for breaking up aggregates of magnetic iron material with organic particles and/or microfibers by means of the use of an aqueous solution of a salt selected from the group consisting of alkaline metal bicarbonate, alkaline earth metal bicarbonate, ammonium bicarbonate, alkaline metal carbonate, ammonium carbonate, and a mixture of one or more of said salts, wherein the concentration of said salt or its mixtures is at least 4 g/L, and the reuse of said aqueous salt solution, the process comprising:
i) performing steps a)-c) defined in claims 1-11,
ii) filtering the resulting mixture after the separation of the magnetic iron material particles of step c) to obtain the aqueous solution of a salt selected from the group consisting of alkaline metal bicarbonate, alkaline earth metal bicarbonate, ammonium bicarbonate, alkaline metal carbonate, ammonium carbonate, and a mixture of one or more of said salts, wherein the concentration of said salt or its mixtures is at least 4 g/L,
iii) providing aggregates of magnetic iron material with organic particles and/or microfibers, wherein the size of the organic particles is comprised in the range of 0.1 µm to 5 mm,
iv) introducing the aggregates of step iii) in the aqueous salt solution obtained in step ii) to break up the aggregates, and
v) optionally separating the magnetic iron material particles from the organic particles and/or microfibers by applying a magnetic field.

14. A process for breaking up aggregates of magnetic iron material with organic particles and/or microfibers and the reuse of the magnetic iron material, the process comprising:
A) performing steps a)-c) defined in claims 1-10,
B) washing the magnetic material particles separated in step c), preferably wherein the washing is performed with water or with an acidic aqueous solution,
C) providing an aqueous matrix comprising organic particles and/or microfibers, wherein the size of the organic particles is comprised in the range of 0.1 µm to 5 mm,
D) adding the washed magnetic material particles obtained after step B) to the aqueous matrix provided in step C) to form aggregates of magnetic iron material with organic particles and/or microfibers, and
E) optionally separating the aggregates of magnetic iron material particles with organic particles and/or microfibers by applying a magnetic field.

15. Use of the process for breaking up aggregates of magnetic iron material with organic particles according to any of the preceding claims for the recovery of the magnetic iron material and/or the recovery of the aqueous solution of a salt selected from the group consisting of alkaline metal bicarbonate, alkaline earth metal bicarbonate, ammonium bicarbonate, alkaline metal carbonate, ammonium carbonate, and a mixture of one or more of said salts.
